# EUROPÄISCHE PATENTSCHRIFT

(11) **EP 1 828 818 B1**
(45) Veröffentlichungstag und Bekanntmachung des Hinweises auf die Patenterteilung: **17.10.2012**
(21) Anmeldenummer: 05821542.7
(22) Anmeldetag: 23.12.2005
(51) Int. Cl.: G02B 5/08, G02B 1/10, G21K 1/06

(54) **THERMISCH STABILER MULTILAYER-SPIEGEL FÜR DEN EUV-SPEKTRALBEREICH**
THERMALLY STABLE MULTILAYER MIRROR FOR THE EUV SPECTRAL REGION
MIROIR MULTICOUCHE THERMOSTABLE POUR LA ZONE SPECTRALE DE L'ULTRAVIOLET EXTREME

(30) Priorität: 23.12.2004 DE 102004062289
(43) Veröffentlichungstag der Anmeldung: 05.09.2007
(73) Patentinhaber: Fraunhofer-Gesellschaft zur Förderung der angewandten Forschung e.V., 80686 München (DE)
(72) Erfinder: BENOIT, Nicolas, 35390 Giessen (DE); FEIGL, Torsten, 07743 Jena (DE); KAISER, Norbert, 07745 Jena (DE); YULIN, Sergiy, 07745 Jena (DE)
(74) Vertreter: Epping - Hermann - Fischer
(86) Internationale Anmeldenummer: PCT/DE2005/002315
(87) Internationale Veröffentlichungsnummer: WO 2006/066563

(56) Entgegenhaltungen:
- WO-A1-2004/053540
- WO-A2-2004/092693
- WO-A2-2005/091887
- DE-A1- 10 011 547
- DE-A1- 10 011 548
- US-A- 6 160 867
- US-A1- 2003 043 456
- US-A1- 2004 121 134
- US-B1- 6 396 900
- US-B1- 6 508 561
- TAKENAKA H ET AL: "DESIGN AND FABRICATION OF HIGHLY HEAT-RESISTANT MO/SI MULTILAYER SOFT X-RAY MIRRORS WITH INTERLEAVED BARRIER LAYERS" JOURNAL OF SYNCHROTRON RADIATION, Bd. 5, Nr. PART 3, 4. August 1997 (1997-08-04), Seiten 708-710, XP008007468 ISSN: 0909-0495
- BAJT S ET AL: "IMPROVED REFLECTANCE AND STABILITY OF MO/SI MULTILAYERS" PROCEEDINGS OF THE SPIE, SPIE, BELLINGHAM, VA, US, Bd. 4506, 31. Juli 2001 (2001-07-31), Seiten 65-75, XP008017154 ISSN: 0277-786X

## Beschreibung

Die Erfindung betrifft einen thermisch stabilen Multilayer-Spiegel für den extremen ultravioletten Spektralbereich (EUV).

Reflektierende optische Bauelemente für die Nutzung im extremen ultravioletten Spektralbereich (EUV), der den Wellenlängenbereich von etwa 10 nm bis etwa 50 nm umfasst, können mit Multilayer-Spiegeln realisiert werden, die eine in der Regel periodische Schichtenfolge aus einer Vielzahl von Dünnschichtpaaren enthalten. Ein Dünnschichtpaar enthält im allgemeinen zwei Schichten aus verschiedenen Materialien, die in dem zur Verwendung des Bauelements vorgesehenen Wellenlängenbereich einen möglichst großen Unterschied in ihren optischen Konstanten aufweisen sollten. Zumindest eines dieser Materialien sollte bei der vorgesehenen Wellenlänge eine möglichst geringe Absorption aufweisen. Die Auswahl der Materialien für die Multilayer-Spiegel ist daher vor allem von der Wellenlänge, bei der das optische Bauelement verwendet werden soll, abhängig. Im EUV-Spektralbereich gibt es daher für jeweils einen bestimmten, meist nur wenige Nanometer breiten Wellenlängenbereich eine optimale Materialpaarung, welche aufgrund des optischen Kontrastes der Schichtmaterialien eine hohe Reflexion garantiert.

Im Wellenlängenbereich von etwa 12,5 bis 14 nm, der insbesondere für die Entwicklung optischer Systeme für Anwendungen in der EUV-Lithographie von großer Bedeutung ist, werden bevorzugt Multilayer-Spiegel aus der Materialpaarung Molybdän und Silizium verwendet, da zwischen diesen Materialien ein besonders guter optischer Kontrast in dem genannten Wellenlängenbereich besteht. Mit Mo/Si(Molybdän-Silizium)-Multilayer-Spiegeln kann beispielsweise eine Reflexion von etwa 70 % bei einer Wellenlänge von 13,5 nm erzielt werden.

Eine derart hohe Reflexion ist besonders wichtig für Anwendungen, bei denen eine mehrfache Reflexion an Multilayer-Spiegeln erfolgt, da die Reflexion des gesamten optischen Systems in diesem Fall exponentiell mit der Anzahl der Spiegel abnimmt. Bei einer Anordnung aus mehreren Spiegeln hat deshalb bereits eine geringfügige Verbesserung der Reflexion eines Einzelspiegels einen erheblichen Einfluss auf die Gesamtreflexion des optischen Systems. Dies ist insbesondere bei optischen Systemen für die EUV-Lithographie der Fall, bei denen die Verwendung von zum Beispiel 11 Multilayer-Spiegeln vorgesehen ist.

Zur Erzielung einer hohen Reflexion sind insbesondere möglichst glatte Grenzflächen an den Schichtübergängen zwischen den Molybdänschichten und den Siliziumschichten erforderlich. Andererseits ist aber die Neigung der Materialien Molybdän und Silizium zur Bildung von Molybdänsilizid, insbesondere MoSi₂, und zu Interdiffusionsprozessen an den Grenzflächen bekannt, beispielsweise aus der DE 100 11 547 C2. Insbesondere bei erhöhten Anwendungstemperaturen besteht daher die Gefahr einer Degradation derartiger Multilayer-Spiegel, durch welche die Reflexion deutlich vermindert wird. Neben einer Verminderung der Reflexion ist mit der durch Interdiffusionsprozesse und Molybdänsilizidbildung bedingten Degradation auch eine Abnahme der Dicke der Schichtpaare, die auch als Periodendicke bezeichnet wird, verbunden. Durch diese Abnahme der Periodendicke erfolgt eine Verschiebung des Reflexionsmaximums zu einer kürzeren Wellenlänge. Die Funktion eines auf solchen Multilayer-Spiegeln basierenden optischen Systems kann durch derartige Degradationsprozesse erheblich beeinträchtigt oder sogar vollständig zerstört werden.

Zur Erhöhung der thermischen Stabilität von Mo/Si-Multilayer-Spiegeln ist aus der DE 100 11 547 C2 bekannt, an den Grenzflächen zwischen den Molybdänschichten und den Siliziumschichten jeweils eine Barriereschicht aus Mo₂C einzufügen.

Ferner ist in der DE 100 11 548 C2 die Verwendung von Barriereschichten aus MoSi₂ zur Erhöhung der thermischen Stabilität beschrieben.

Die in den beiden zuvor genannten Druckschriften offenbarten Schichtsysteme zeichnen sich zumindest auf einer Zeitskala von einigen Stunden durch eine thermische Stabilität bis etwa 500 °C aus. Allerdings weisen sie im Vergleich zu einem herkömmlichen Mo/Si-Multilayerspiegel eine vergleichsweise geringe Reflektivität von weniger als 60 % auf.

Ein anderer Stand der Technik wird in WO 2004/092693 beschrieben.

Weiterhin ist aus der US 6,396,900 B1 bekannt, Barriereschichten aus dem Material B₄C in Mo/Si-Multilayer-Spiegel einzufügen, um die Reflexion und/oder die thermische Stabilität zu erhöhen. Diese Schichtsysteme sind zwar durch eine vergleichsweise hohe Reflexion von etwa 70 % gekennzeichnet, wobei die thermische Stabilität, insbesondere die Langzeitstabilität, allerdings bei Temperaturen von etwa 400 °C oder mehr nicht gewährleistet ist.

Zum Betrieb optischer Systeme für die EUV-Lithographie sind als Strahlungsquellen insbesondere Laser-Plasmaquellen vorgesehen, die bei einer Wellenlänge von etwa 13,5 nm emittieren. Da die Reflexion des gesamten optischen Systems bei der EUV-Lithographie aufgrund der Vielzahl der Spiegel verhältnismä-βig gering ist, müssen derartige EUV-Strahlungsquellen mit hohen Leistungen betrieben werden, um die im optischen System entstehenden Reflexionsverluste auszugleichen. In der Nähe einer derartigen Hochleistungs-EUV-Strahlungsquelle können EUV-Multilayer-Spiegel hohen Temperaturen ausgesetzt sein. Dies ist insbesondere für einen EUV-Multilayer-Spiegel der Fall, der zur Strahlformung, beispielsweise als sogenannter Kollektor-Spiegel, dicht an einer EUV-Strahlungsquelle positioniert wird.

Es besteht daher ein Bedarf an Multilayer-Spiegeln, die sich sowohl durch eine hohe thermische Langzeitstabilität als auch durch eine hohe Reflexion auszeichnen.

Der Erfindung liegt die Aufgabe zugrunde, einen Multilayer-Spiegel für den EUV-Spektralbereich anzugeben, der sich sowohl durch eine hohe thermische Stabilität, insbesondere durch eine vergleichsweise hohe Langzeitstabilität, als auch durch eine hohe Reflexion auszeichnet.

Diese Aufgabe wird erfindungsgemäß durch einen Multilayer-Spiegel nach Anspruch 1 gelöst. Vorteilhafte Ausgestaltungen und Weiterbildungen der Erfindung sind Gegenstand der abhängigen Ansprüche.

Ein erfindungsgemäßer Multilayer-Spiegel für EUV-Strahlung wird in Anspruch 1 offenbart, vorzugsweise wird SiB₄ oder SiB₆ als Barriereschicht verwendet.

Der Begriff Grenzfläche umfasst im Rahmen der Erfindung den Übergangsbereich zwischen jeweils einer Molybdänschicht und einer Siliziumschicht, einschließlich des Falls, dass die Molybdänschicht und die Siliziumschicht aufgrund der dazwischen angeordneten Barriereschicht nicht unmittelbar aneinander angrenzen.

Mit den Barriereschichten aus einem Siliziumborid wird die Bildung von Molybdänsilizid sowie die Interdiffusion an den Grenzflächen zwischen den Molybdänschichten und den Siliziumschichten vorteilhaft vermindert. Die thermische Stabilität sowie die Langzeit- und Strahlungsstabilität der Multilayer-Spiegel werden dadurch vorteilhaft verbessert.

Besonders geeignet ist ein Multilayer-Spiegel gemäß der Erfindung für die Verwendung bei Temperaturen von mehr als 300 °C, insbesondere im Temperaturbereich von 300 °C bis 500 °C. Die Bereichsangabe schließt, wie alle Bereichsangaben innerhalb dieser Anmeldung, die angegebenen Grenzen mit ein.

Ein erfindungsgemäßer Multilayer-Spiegel hat insbesondere den Vorteil einer hohen Langzeitstabilität bei Temperaturen von mehr als 300 °C, insbesondere im Temperaturbereich von 300 °C bis 500 °C. Beispielswiese weist ein erfindungsgemäßer Multilayer-Spiegel auch nach einer Betriebszeit von 100 h bei einer Temperatur von etwa 500 °C noch keine signifikante Verminderung der Reflexion und/oder der Periodendicke auf.

Aufgrund seiner hohen thermischen Beständigkeit kann ein erfindungsgemäßer Multilayer-Spiegel insbesondere in der Nähe einer EUV-Strahlungsquelle, beispielsweise einer Laser-Plasmaquelle, verwendet werden.

Bei einer bevorzugten Ausgestaltung der Erfindung wird der Multilayer-Spiegel auf eine hohe Betriebstemperatur, beispielsweise auf 300 °C oder mehr, vorzugsweise sogar auf 400 °C oder mehr, erhitzt, um die Abscheidung von Verunreinigungen auf dem Multilayer-Spiegel zu vermindern. Dazu kann eine Heizvorrichtung vorgesehen sein, die bevorzugt an einem Substrat des Multilayer-Spiegels angebracht ist. Dies ist insbesondere vorteilhaft bei einem Multilayer-Spiegel, der in der Nähe einer EUV-Strahlungsquelle angeordnet ist, da der Multilayer-Spiegel in diesem Fall durch ein in der EUV-Strahlungsquelle verwendetes Targetmaterial, beispielsweise Lithium, das mittels einem Laserstrahl zur Emission von EUV-Strahlung angeregt wird, verunreinigt werden könnte, wodurch die Reflexion beeinträchtigt würde. Durch ein Heizen des Multilayer-Spiegels auf eine Betriebstemperatur von vorzugsweise etwa 400 °C wird zum Beispiel der Haftkoeffizient von Lithium auf einer Oberfläche des Multilayer-Spiegels vorteilhaft derart vermindert, dass die Reflexion auch nach einer Betriebszeit von 100 h oder mehr nicht signifikant beeinträchtigt wird.

Bei einer bevorzugten Ausführungsform der Erfindung ist an allen Grenzflächen zwischen jeweils einer Molybdänschicht und jeweils einer Siliziumschicht jeweils eine Barriereschicht angeordnet, die ein Siliziumborid, vorzugsweise SiB₄ oder SiB₆, enthält. Durch die an allen Grenzflächen enthaltenen Barriereschichten wird eine besonders hohe thermische Stabilität des Multilayer-Spiegels erreicht.

Bei einer weiteren bevorzugten Ausführungsform der Erfindung ist an Grenzflächen, an denen in Wachstumsrichtung eine Molybdänschicht auf eine Siliziumschicht folgt, jeweils eine Barriereschicht angeordnet, die ein Siliziumborid enthält, und an Grenzflächen, an denen in Wachstumsrichtung eine Siliziumschicht auf eine Molybdänschicht folgt, jeweils keine Barriereschicht angeordnet.

Ein Vorteil dieser Ausführungsform der Erfindung besteht darin, dass elektromagnetische Strahlung, die an dem durch den Multilayer-Spiegel ausgebildeten Interferenzschichtsystem reflektiert wird, innerhalb dieses Interferenzschichtsystems eine stehende elektromagnetische Welle ausbildet, deren Knoten an den Grenzflächen angeordnet sind, an denen in Wachstumsrichtung eine Molybdänschicht auf eine Siliziumschicht folgt. Die Barriereschichten sind daher bei dieser Ausführungsform der Erfindung in Bereichen des Interferenzschichtsystems angeordnet, an denen die elektrische Feldstärke der stehenden Welle gering ist. Die Absorption innerhalb der Barriereschichten ist daher vorteilhaft gering.

Die Dicke der Barriereschichten beträgt vorteilhaft zwischen 0,1 nm und 1,5 nm, besonders bevorzugt zwischen 0,2 nm und 0,8 nm. Barriereschichten mit einer derartigen Dicke sind geeignet, die Interdiffusion bzw. die Bildung von Molybdänsilizid an den Grenzflächen effektiv zu verhindern. Andererseits sind sie aber noch ausreichend dünn, so dass die Absorption innerhalb dieser Barriereschichten verhältnismäßig gering ist.

Der Multilayer-Spiegel enthält bevorzugt 40 bis 70 Schichtpaare. Unter einem Schichtpaar wird dabei eine Siliziumschicht und eine ihr benachbarte Molybdänschicht einschließlich der angrenzenden Barriereschicht oder Barriereschichten verstanden. Eine weitere Erhöhung der Anzahl der Schichtpaare würde sich aufgrund der begrenzten Eindringtiefe der Strahlung in diesem Spektralbereich nur geringfügig auf die Reflexion des Multilayer-Spiegels auswirken.

Der Multilayer-Spiegel kann beispielsweise eine periodische Anordnung aus Siliziumschichten, Molybdänschichten und Barriereschichten enthalten, in der die Dicke der Siliziumschichten, der Molybdänschichten sowie der Barriereschichten innerhalb des Multilayer-Spiegels nicht variiert. Mit einem derartigen periodischen Multilayer-Spiegel lässt sich eine hohe Reflexion in einem engen Spektralbereich um eine vorgegebene Wellenlänge λ erzielen.

Der Multilayer-Spiegel kann im Rahmen der Erfindung aber auch eine aperiodische Schichtenfolge enthalten, innerhalb derer die Dicken der Siliziumschichten und/oder der Molybdänschichten variieren. Mit einem derartigen aperiodischen Multilayer-Spiegel ist es möglich, eine hohe Reflexion in einem vergleichsweise breiten Wellenlängen- und/oder Einfallswinkelbereich zu erzielen, wobei die maximale Reflexion bei einer vorgegebenen Wellenlänge allerdings geringer ist als bei einem periodischen Multilayer-Spiegel.

Bevorzugt ist bei der Erfindung eine Deckschicht auf den Multilayer-Spiegel aufgebracht, die sich in ihren Material und/oder ihrer Dicke von den Schichten des Multilayer-Spiegels unterscheidet, um den Multilayer-Spiegel insbesondere vor Oxidation und Kontamination zu schützen. Anstatt einer einzelnen Deckschicht können auch zwei oder mehr Deckschichten aufgebracht sein.

Beispielsweise können eine oder mehrere Deckschichten aufgebracht sein, die nicht aus Molybdän oder Silizium bestehen. Besonders geeignete Materialien für die Deckschicht sind Oxide, Nitride, Carbide oder Boride, ferner auch Ruthenium, Rhodium, Scandium und Zirkonium. Insbesondere kann eine Deckschicht des Multilayer-Spiegels aus dem Material der Barriereschichten, also einem Siliziumnitrid oder einem Siliziumborid, ausgebildet sein.

Eine Verbesserung der Reflexion des Multilayer-Spiegels ist vorteilhaft dadurch möglich, dass der Multilayer-Spiegel auf ein Substrat aufgebracht ist, das eine Oberflächenrauheit von weniger als 0,2 nm aufweist. Unter der Oberflächenrauheit wird dabei die beispielsweise aus Kurvenanpassungen an mit Cu Kα-Strahlung gemessene Röntgenreflexionskurven bestimmbare rms-Rauheit der Oberfläche verstanden.

Der Multilayer-Spiegel kann zum Beispiel auf ein Halbleitersubstrat wie beispielsweise einen Siliziumwafer aufgebracht sein. Besonders geeignet sind auch Substrate aus SiC. Weiterhin kann das Substrat aus einem Glas oder einer Glaskeramik bestehen. Besonders vorteilhaft besteht das Substrat aus einem Glas oder einer Glaskeramik mit einem niedrigen thermischen Ausdehnungskoeffizienten, beispielsweise ULE (Ultra Low Expansion)-Glas oder Zerodur. Dadurch werden mechanische Spannungen, die bei hohen Betriebstemperaturen, insbesondere beim Aufheizen des Multilayer-Spiegels auf eine Betriebstemperatur von beispielsweise etwa 400 °C entstehen könnten, vorteilhaft vermindert.

Das Substrat ist zum Beispiel ein ebenes Substrat. Ferner ist es möglich, dass der Multilayer-Spiegel auf eine sphärisch gekrümmte Oberfläche eines Substrats aufgebracht ist. Weiterhin kann die Oberfläche des Substrats eine asphärische Krümmung, beispielsweise eine parabolische oder elliptische Krümmung aufweisen. Zum Beispiel ist eine parabolisch gekrümmte Oberfläche zur Erzeugung eines weitgehend parallelen Strahls aus einer nahezu punktförmigen Strahlungsquelle geeignet, während eine elliptisch gekrümmte Oberfläche zur Fokussierung des Strahls einer Strahlungsquelle, die in einem ersten Brennpunkt der Ellipse angeordnet ist, in einen zweiten Brennpunkt der Ellipse geeignet ist.

Ein Multilayer-Spiegel gemäß der Erfindung kann zum Beispiel für Bauelemente zur Strahlführung und/oder Strahlformung einer EUV-Strahlungsquelle verwendet werden, insbesondere für ebene Spiegel zur Strahlumlenkung oder für gekrümmte Spiegel zur Kollimation oder Fokussierung der Strahlung.

Aufgrund einer spektral sehr schmalbandigen Reflexion, die eine volle Halbwertsbreite von beispielsweise etwa 0,5 nm oder weniger aufweisen kann, ist ein Multilayer-Spiegel gemäß der Erfindung auch für die Anwendung in Spektrometern, insbesondere zur Charakterisierung von EUV-Strahlungsquellen, geeignet.

Die Erfindung wird im folgenden anhand von Ausführungsbeispielen im Zusammenhang mit den Figuren 1 bis 6 näher erläutert.

Es zeigen:
Figur 1 eine schematische Darstellung eines Querschnitts durch ein Ausführungsbeispiel eines Multilayer-Spiegels gemäß der Erfindung,
Figur 2 eine graphische Darstellung der Reflexion R in Abhängigkeit von der Wellenlänge λ von drei weiteren Ausführungsbeispielen eines Multilayer-Spiegels gemäß der Erfindung im Vergleich zu einem herkömmlichen Mo/Si-Multilayer-Spiegel,
Figur 3 eine graphische Darstellung der Reflexion R in Abhängigkeit von der Wellenlänge λ von drei weiteren Ausführungsbeispielen eines Multilayer-Spiegels gemäß der Erfindung im Vergleich zu einem herkömmlichen Mo/Si-Multilayer-Spiegel,
Figur 4 eine schematische Darstellung eines Querschnitts durch ein weiteres Ausführungsbeispiel eines Multilayer-Spiegels gemäß der Erfindung,
Figur 5 eine graphische Darstellung der Reflexion R in Abhängigkeit von der Wellenlänge λ von drei weiteren Ausführungsbeispielen eines Multilayer-Spiegels gemäß der Erfindung im Vergleich zu einem herkömmlichen Mo/Si-Multilayer-Spiegel,
Figur 6 eine graphische Darstellung der Reflexion R in Abhängigkeit von der Wellenlänge λ von drei weiteren Ausführungsbeispielen eines Multilayer-Spiegels gemäß der Erfindung im Vergleich zu einem herkömmlichen Mo/Si-Multilayer-Spiegel, und
Figur 7 eine schematische graphische Darstellung einer Anordnung, bei der ein Ausführungsbeispiel eines erfindungsgemäßen Multilayer-Spiegels als Kollektor-Spiegel einer EUV-Strahlungsquelle verwendet wird.

Gleiche oder gleichwirkende Elemente sind in den Figuren mit den gleichen Bezugszeichen versehen.

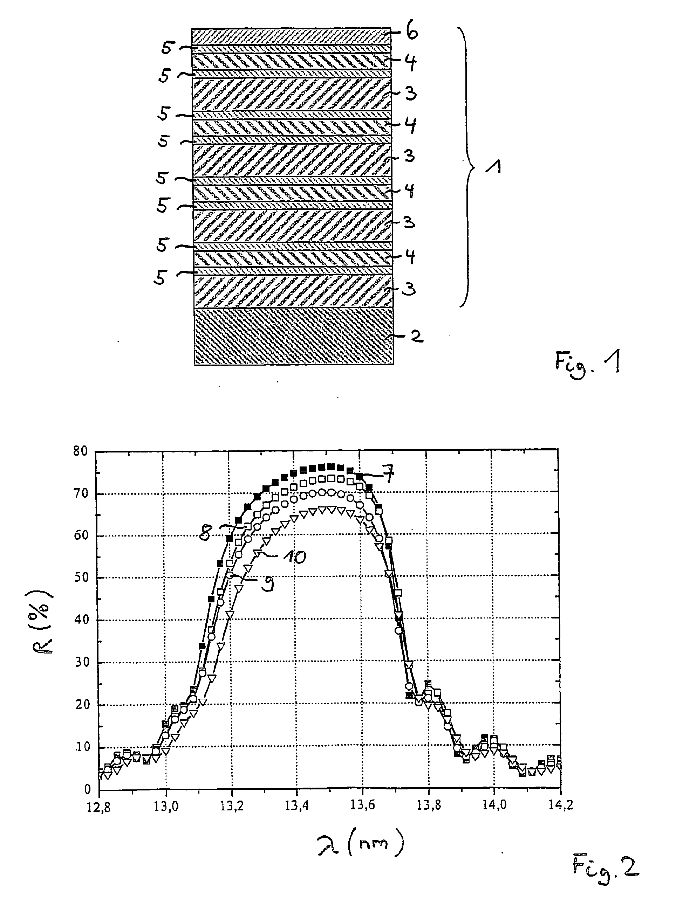

Bei dem in Figur 1 dargestellten ersten Ausführungsbeispiel der Erfindung ist ein Multilayer-Spiegel 1 aus alternierenden Siliziumschichten 3 und Molybdänschichten 4 auf einem Substrat 2 aufgebracht, wobei jeweils eine Siliziumschicht 3 und eine benachbarte Molybdänschicht 4 ein Schichtpaar bilden. Zur Vereinfachung der Darstellung sind nur vier Schichtpaare dargestellt. Eine bevorzugte Anzahl der Schichtpaare beträgt 40 bis 70.

Innerhalb des Multilayer-Spiegels 1 ist an allen Grenzflächen, also sowohl an den Grenzflächen, an denen in Wachstumsrichtung eine Siliziumschicht 3 auf eine Molybdänschicht 4 folgt, als auch an den Grenzflächen, an denen in Wachstumsrichtung eine Molybdänschicht 4 auf eine Siliziumschicht 3 folgt, jeweils eine Barriereschicht 5 aus einem Siliziumborid enthalten. Die Dicke der Barriereschichten 5 beträgt bevorzugt etwa 0,1 nm bis 1 nm, besonders bevorzugt etwa 0,2 nm bis 0,5 nm. Die Barriereschichten 5 vermindern sowohl die Interdiffusion als auch die Bildung von Molybdänsilizid an den Grenzflächen zwischen den Molybdänschichten 4 und den Siliziumschichten 3. Dadurch wird die thermische Stabilität des Multilayer-Spiegels 1, insbesondere im Temperaturbereich von etwa 300 °C bis 500 °C, verbessert.

Das Substrat 2 kann beispielsweise ein Halbleitersubstrat, insbesondere aus Silizium oder SiC, oder ein Substrat aus einem Glas oder einer Glaskeramik, insbesondere einer Glaskeramik mit einem geringem thermischen Ausdehnungskoeffizienten, sein. Vorteilhaft weist das Substrat 2 eine Oberflächenrauheit von weniger als 0,2 nm auf.

Das Aufbringen des Multilayer-Spiegels 1 auf ein Substrat 2 erfolgt bevorzugt mittels Sputtern, insbesondere mittels DC-Magnetronsputtern, wobei beispielsweise Argon als Arbeitsgas verwendet wird. Im Rahmen der Erfindung sind aber auch andere Beschichtungsverfahren denkbar, insbesondere Elektronenstrahlverdampfung, Plasma-Ionengestützte Verdampfung (PIAD - Plasma Ion Assisted Deposition) oder Laser-Ablation.

Der Multilayer-Spiegel 1 weist bevorzugt eine Deckschicht 6 auf, die nicht aus Silizium oder Molybdän besteht. Durch die Auswahl eines gegen Oxidation verhältnismäßig unempfindlichen Materials für die Deckschicht 6 kann die thermische Stabilität des Multilayer-Spiegels 1 weiter erhöht werden. Besonders vorteilhaft ist die Deckschicht 6 wie die Barriereschichten 5 aus einem Siliziumborid oder einem Siliziumnitrid gebildet. In diesem Fall ist der Herstellungsaufwand vorteilhaft gering, da für das Aufbringen der Deckschicht 6 keine Vorkehrungen zur Beschichtung mit einem weiteren, nicht bereits im übrigen Multilayer-Spiegel 1 enthaltenen Material getroffen werden müssen.

Figur 2 zeigt eine graphische Darstellung der Reflexion R für senkrechten Einfall in Abhängigkeit von der Wellenlänge λ für einen herkömmlichen Multilayer-Spiegel ohne Barriereschichten (Kurve 7) im Vergleich zu drei Ausführungsbeispielen von Multilayer-spiegeln, bei denen an allen Grenzflächen zwischen Molybdänschichten und Siliziumschichten jeweils eine Barriereschicht aus Si₃N₄ angeordnet ist, wobei die Dicke der Barriereschichten jeweils 0,3 nm (Kurve 8), 0,6 nm (Kurve 9) und 0,9 nm (Kurve 10) beträgt. Die Schichtdicken der Multilayer-Spiegel, die der Simulation zugrunde gelegt sind, sind für eine maximale Reflexion bei der Wellenlänge λ = 13,5 nm optimiert. Die Periodendicke der Multilayer-Spiegel beträgt etwa 6,9 nm und die Anzahl der Schichtpaare jeweils 60.

Die Multilayer-Spiegel zeichnen sich durch eine hohe thermische Stabilität aus, wobei die Verminderung der Reflexion durch die eingefügten Barriereschichten im Vergleich zu dem herkömmlichen Multilayer-Spiegel ohne Barriereschichten vorteilhaft gering ist. Beispielsweise beträgt die simulierte maximale Reflexion für 0,6 nm dicke Barriereschichten (Kurve 9) etwa 70 %. Bei 0,9 nm dicken Barriereschichten tritt eine Verminderung der Reflexion im Vergleich zu dem herkömmlichen Multilayer-Spiegel um etwa 10 Prozentpunkte auf. Sogar bei diesen vergleichsweise dicken Barriereschichten beträgt die maximale Reflexion mehr als 65 %.

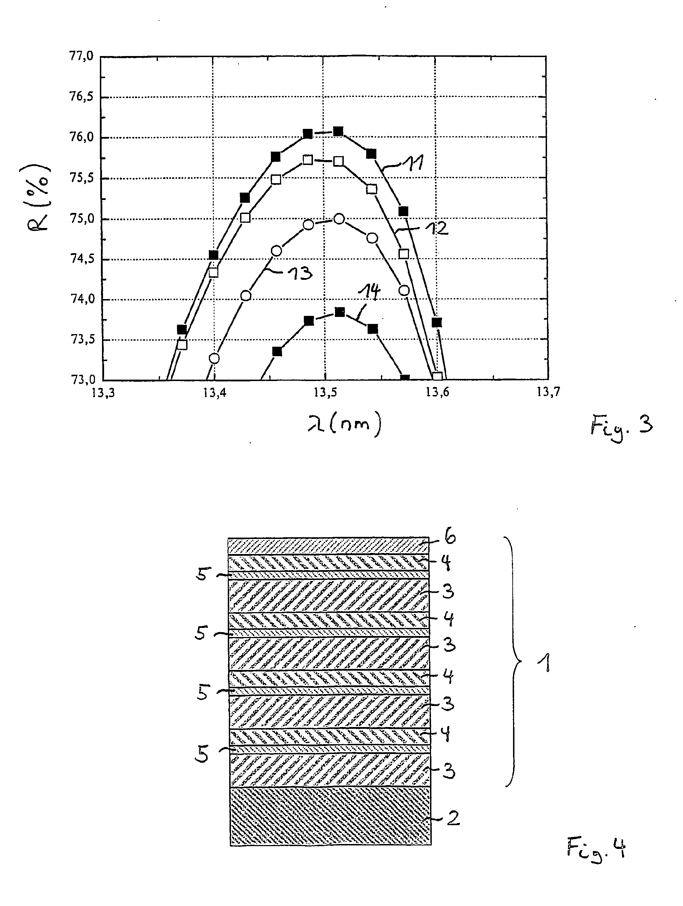

Figur 3 zeigt eine graphische Darstellung der Reflexion R für senkrechten Einfall in Abhängigkeit von der Wellenlänge λ für einen herkömmlichen Multilayer-Spiegel ohne Barriereschichten (Kurve 11) im Vergleich zu drei Ausführungsbeispielen von Multilayer-Spiegeln gemäß der Erfindung, bei denen an allen Grenzflächen zwischen Molybdänschichten und Siliziumschichten jeweils eine Barriereschicht aus SiB₄ angeordnet ist, wobei die Dicke der Barriereschichten 0,3 nm (Kurve 12), 0,6 nm (Kurve 13) und 0,9 nm (Kurve 14) beträgt. Da die in der Figur 3 dargestellten Reflexionskurven aufgrund der geringen Unterschiede in der Reflexion ansonsten nur schwer zu unterscheiden wären, ist in der Figur 3 im Gegensatz zur Figur 2 eine Skalierung gewählt worden, die nur die unmittelbare Umgebung des Reflexionsmaximums darstellt. Die Schichtdicken der Multilayer-Spiegel, die der Simulation zugrunde gelegt sind, sind für eine maximale Reflexion bei der Wellenlänge λ = 13,5 nm optimiert. Wie bei den im Zusammenhang mit der Fig. 2 beschriebenen Ausführungsbeispielen beträgt die Periodendicke der Multilayer-Spiegel etwa 6,9 nm und die Anzahl der Schichtpaare jeweils 60.

Die Verminderung der Reflexion durch die SiB₄-Barriereschichten gegenüber einem herkömmlichen Multilayer-Spiegel ohne Barriereschichten ist vorteilhaft noch geringer als bei der Verwendung von Barriereschichten aus einem Siliziumnitrid. Insbesondere reduziert sich die maximale Reflexion sogar bei 0,9 nm dicken Barriereschichten aus SiB₄ (Kurve 14) im Vergleich zu einem herkömmlichen Multilayer-Spiegel nur um weniger als 3 Prozentpunkte.

Bei dem in Figur 4 dargestellten Ausführungsbeispiel eines Multilayer-Spiegels gemäß der Erfindung sind Barriereschichten 5 aus einem Siliziumborid ausschließlich an den Grenzflächen angeordnet, an denen in Wachstumsrichtung eine Molybdänschicht 4 auf eine Siliziumschicht 3 folgt. Die Barriereschichten 5 sind bei dieser Ausführungsform der Erfindung an den Stellen innerhalb des Multilayers positioniert, die mit den Knoten der elektrischen Feldstärke übereinstimmen. Die Reflexion wird in diesem Fall durch die Barriereschichten 5 im Vergleich zu einem herkömmlichen Multilayer-Spiegel, der keine Barriereschichten aufweist, nur geringfügig vermindert.

Bei dieser Ausführungsform der Erfindung wird die Interdiffusion und Silizidbildung an den Grenzflächen, an denen eine Molybdänschicht 4 auf eine Siliziumschicht 3 folgt, durch die Barriereschichten 5 vermindert. Dies ist insbesondere deshalb vorteilhaft, da diese Grenzflächen, wie beispielsweise aus der US 6,396,900 B1 bekannt, bei herkömmlichen Mo/Si-Multilayer-Spiegeln stärker von Interdiffusion und Silizidbildung betroffen sind, als die Grenzflächen, an denen eine Siliziumschicht auf eine Molybdänschicht folgt.

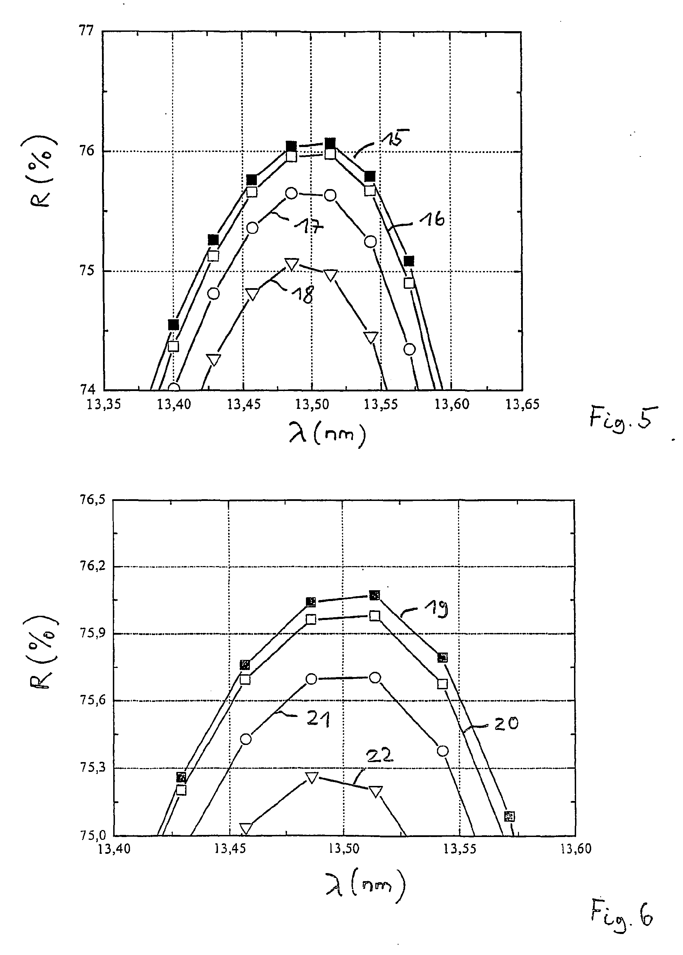

Figur 5 zeigt eine graphische Darstellung der Reflexion R für senkrechten Einfall in Abhängigkeit von der Wellenlänge 1 für einen herkömmlichen Multilayer-Spiegel ohne Barriereschichten (Kurve 15) im Vergleich zu drei Ausführungsbeispielen , bei denen ausschließlich an den Grenzflächen, bei denen in Wachstumsrichtung eine Molybdänschicht auf eine Siliziumschicht folgt, jeweils eine Barriereschicht aus Si₃N₄ angeordnet ist, wobei die Dicken der Barriereschichten jeweils 0,3 nm (Kurve 16), 0,6 nm (Kurve 17) und 0,9 nm (Kurve 18) betragen. Die Anzahl der Schichtpaare der Multilayer-Spiegel beträgt jeweils 60 und die Periodendicke jeweils etwa 6,9 nm.

Die in Figur 5 dargestellten Reflexionskurven verdeutlichen, dass das Einfügen von Barriereschichten an allen Grenzflächen, an denen eine Molybdänschicht auf eine Siliziumschicht folgt, nur eine äußerst geringe Verminderung der Reflexion bewirkt. Da bei diesen Ausführungsbeispielen von Multilayer-Spiegeln die Barriereschichten aus Siliziumnitrid jeweils in den Knoten des elektrischen Feldes innerhalb des Multilayer-Spiegels angeordnet sind, haben sie nur einen geringen Einfluss auf die Reflexion. Beispielsweise beträgt die Verminderung der Reflexion selbst bei Verwendung 0,9 nm dicker Barriereschichten aus Si₃N₄ (Kurve 18) im Vergleich zu einem herkömmlichen Multilayer-Spiegel (Kurve 15) nur etwa einen Prozentpunkt.

Figur 6 zeigt eine graphische Darstellung der Reflexion R für senkrechten Einfall in Abhängigkeit von der Wellenlänge λ, für einen herkömmlichen Multilayer-Spiegel ohne Barriereschichten (Kurve 19) im Vergleich zu drei Ausführungsbeispielen der Erfindung, bei denen an allen Grenzflächen, bei denen in Wachstumsrichtung eine Molybdänschicht auf eine Siliziumschicht folgt, jeweils eine Barriereschicht aus SiB₄ angeordnet ist, wobei die Dicken der Barriereschichten jeweils 0,3 nm (Kurve 20), 0,6 nm (Kurve 22) und 0,9 nm (Kurve 2) betragen. Die Anzahl der Schichtpaare der Multilayer-Spiegel beträgt jeweils 60 und die Periodendicke jeweils etwa 6,9 nm. Bei diesen Ausführungsbeispielen ist die Verminderung der Reflexion durch die Barriereschichten aus SiB₄ noch geringer als bei den in Figur 5 dargestellten Ausführungsbeispielen mit Si₃N₄-Barriereschichten. Durch 0,9 nm dicke Barriereschichten aus SiB₄ (Kurve 22) verringert sich die Reflexion im Vergleich zu einem herkömmlichen Multilayer-Spiegel ohne Barriereschichten (Kurve 19) nur um etwa 0,6 Prozentpunkte.

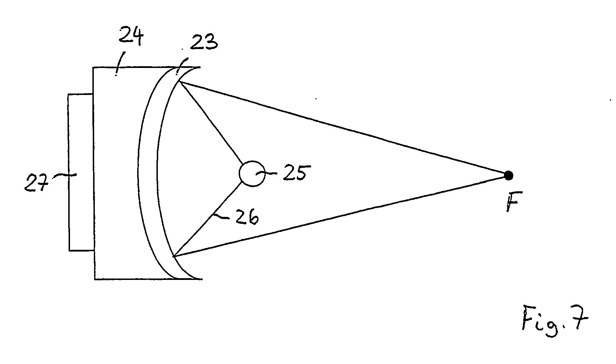

Fig. 7 zeigt schematisch ein Ausführungsbeispiel eines erfindungsgemäßen Multilayer-Spiegels 23, der auf ein gekrümmtes, vorzugsweise asphärisch gekrümmtes Substrat 24 aufgebracht ist. Der Multilayer-Spiegel 23 fungiert als Kollektor-Spiegel einer EUV-Strahlungsquelle 25. Die von der EUV-Strahlungsquelle 25 emittierte EUV-Strahlung 26 wird von dem Kollektor-Spiegel beispielsweise in einen Brennpunkt F fokussiert. Die EUV-Strahlungsquelle 25 ist zum Beispiel eine Laser-Plasma-Strahlungsquelle, in der ein Targetmaterial, beispielsweise Lithium-Tröpfchen, mittels Laserstrahlung zur Emission von EUV-Strahlung angeregt werden. Bei derartigen EUV-Strahlungsquellen besteht oftmals das Problem, dass in der Umgebung der Strahlungsquelle angeordnete optische Elemente durch das Targetmaterial verunreinigt werden. Bei dem Multilayer-Spiegel 23 ist zur Lösung dieses Problems eine Heizvorrichtung 27 an dem Substrat 24 vorgesehen, mit welcher der Multilayer-Spiegel 23 auf eine Temperatur erhitzt wird, bei der das Targetmaterial der EUV-Strahlungsquelle 25 nur einen geringen Haftkoeffizienten aufweist uns somit von der Oberfläche 28 des Multilayer-Spiegels 23 desorbiert. Vorzugsweise wird der Multilayer-Spiegel 23 auf eine Betriebstemperatur von etwa 400 °C oder mehr erhitzt. Eine Temperatur von etwa 400 °C ist insbesondere im Fall eines Lithium-Targets vorteilhaft.

Die Erfindung ist nicht durch die Beschreibung anhand der Ausführungsbeispiele beschränkt.

## Patentansprüche

1. Multilayer-Spiegel für EUV-Strahlung, der eine Mehrzahl alternierender Molybdänschichten (4) und Siliziumschichten (3) enthält, wobei an mehreren Grenzflächen zwischen jeweils einer Molybdänschicht (4) und jeweils einer benachbarten Siliziumschicht (3) eine Barriereschicht (5) angeordnet ist,
**dadurch gekennzeichnet, dass**
die Barriereschicht aus Siliziumborid besteht.

2. Multilayer-Spiegel nach Anspruch 1,
**dadurch gekennzeichnet, dass**
an allen Grenzflächen zwischen jeweils einer Molybdänschicht (4) und jeweils einer Siliziumschicht (3) eine Barriereschicht (5) angeordnet ist, die ein Siliziumborid enthält.

3. Multilayer-Spiegel nach Anspruch 1,
**dadurch gekennzeichnet, dass**
an Grenzflächen, an denen in Wachstumsrichtung eine Molybdänschicht (4) auf eine Siliziumschicht (3) folgt, jeweils eine Barriereschicht (5) angeordnet ist, die ein Siliziumborid enthält, und an Grenzflächen, an denen in Wachstumsrichtung eine Siliziumschicht (3) auf eine Molybdänschicht (4) folgt, jeweils keine Barriereschicht angeordnet ist.

4. Multilayer-Spiegel nach einem der vorhergehenden Ansprüche,
**dadurch gekennzeichnet, dass**
die Barriereschichten (5) eine Dicke im Bereich von 0,2 nm bis 0,8 nm aufweisen.

5. Multilayer-Spiegel nach einem der vorhergehenden Ansprüche,
**dadurch gekennzeichnet, dass**
der Multilayer-Spiegel (1) mindestens eine Deckschicht (6) aufweist, die nicht aus Silizium oder Molybdän besteht.

6. Multilayer-Spiegel nach Anspruch 5,
**dadurch gekennzeichnet, dass**
die Deckschicht (6) ein Siliziumnitrid oder ein Siliziumborid enthält.

7. Multilayer-Spiegel nach Anspruch 5,
**dadurch gekennzeichnet, dass**
die Deckschicht (6) ein Oxid, Silizid, Nitrid, Carbid oder Borid oder zumindest eines der Materialien Ruthenium, Rhodium, Scandium oder Zirkonium enthält.

8. Multilayer-Spiegel nach einem der vorhergehenden Ansprüche,
**dadurch gekennzeichnet, dass**
der Multilayer-Spiegel (23) auf eine gekrümmte Oberfläche eines Substrats (24) aufgebracht ist.

9. Multilayer-Spiegel nach Anspruch 8,
**dadurch gekennzeichnet, dass**
die Oberfläche des Substrats (24) asphärisch gekrümmt ist.

10. Multilayer-Spiegel nach einem der vorhergehenden Ansprüche,
**dadurch gekennzeichnet, dass**
der Multilayer-Spiegel (23) auf ein Substrat (24) aufgebracht ist, an dem eine Heizvorrichtung (27) angebracht ist, um den Multilayer-Spiegel (23) auf eine Betriebstemperatur von 300 °C oder mehr, bevorzugt 400 °C oder mehr, zu erhitzen.

11. Multilayer-Spiegel nach einem der vorhergehenden Ansprüche,
**dadurch gekennzeichnet, dass**
der Multilayer-Spiegel (23) ein Kollektorspiegel einer EUV-Strahlungsquelle (25) ist.

12. Verwendung eines Multilayer-Spiegels nach einem der Ansprüche 1 bis 11 zur Reflexion von EUV-Strahlung bei einer Betriebstemperatur von 300 °C bis 500 °C.

## Claims

1. Multilayer mirror for EUV radiation comprising a plurality of alternating molybdenum layers (4) and silicon layers (3), wherein a barrier layer (5) is arranged at a plurality of interfaces between in each case a molybdenum layer (4) and in each case a neighbouring silicon layer (3),
**characterized in that**
the barrier layer consists of silicon boride.

2. Multilayer mirror according to Claim 1,
**characterized in that**
a barrier layer (5) containing a silicon boride is arranged at all interfaces between in each case a molybdenum layer (4) and in each case a silicon layer (3).

3. Multilayer mirror according to Claim 1,
**characterized in that**
a barrier layer (5) containing a silicon boride is arranged at each interface at which, in the direction of growth, a molybdenum layer (4) follows a silicon layer (3), and no barrier layer is arranged at each interface at which, in the direction of growth, a silicon layer (3) follows a molybdenum layer (4).

4. Multilayer mirror according to one of the preceding claims,
**characterized in that**
the barrier layers (5) have a thickness in the range of 0.2 nm to 0.8 nm.

5. Multilayer mirror according to one of the preceding claims,
**characterized in that**
the multilayer mirror (1) comprises at least one cover layer (6), which does not consist of silicon or molybdenum.

6. Multilayer mirror according to Claim 5,
**characterized in that**
the cover layer (6) contains a silicon nitride or a silicon boride.

7. Multilayer mirror according to Claim 5,
**characterized in that**
the cover layer (6) contains an oxide, silicide, nitride, carbide or boride or at least one of the materials ruthenium, rhodium, scandium or zirconium.

8. Multilayer mirror according to one of the preceding claims,
**characterized in that**
the multilayer mirror (23) is applied to a curved surface of a substrate (24).

9. Multilayer mirror according to Claim 8,
**characterized in that**
the surface of the substrate (24) has an aspherical curvature.

10. Multilayer mirror according to one of the preceding claims,
**characterized in that**
the multilayer mirror (23) is applied to a substrate (24) to which a heating apparatus (27) is fitted in order to heat the multilayer mirror (23) to an operating temperature of 300°C or more, preferably 400°C or more.

11. Multilayer mirror according to one of the preceding claims,
**characterized in that**
the multilayer mirror (23) is a collector mirror for an EUV radiation source (25).

12. Use of a multilayer mirror according to one of Claims 1 to 11 for the reflection of EUV radiation at an operating temperature of 300°C to 500°C.

## Revendications

1. Miroir multicouche pour rayonnement dans l'ultraviolet extrême (UVE), le miroir contenant une alternance de plusieurs couches de molybdène (4) et de plusieurs couches de silicium (3), une couche de barrière (5) étant disposée sur plusieurs surfaces frontières entre une couche de molybdène (4) et une couche de silicium (3) voisine,
**caractérisé en ce que**
la couche de barrière est constituée de borure de silicium.

2. Miroir multicouche selon la revendication 1, **caractérisé en ce qu'**une couche de barrière (5) qui contient un borure de silicium est disposée sur toutes les couches frontières entre chaque couche de molybdène (4) et chaque couche de silicium (3).

3. Miroir multicouche selon la revendication 1, **caractérisé en ce qu'**une couche de barrière (5) qui contient un borure de silicium est disposée sur les surfaces frontières sur lesquelles une couche de molybdène (4) suit une couche de silicium (3) dans la direction de croissance et **en ce qu'**aucune couche de barrière n'est disposée sur les surfaces frontières sur lesquelles une couche de silicium (3) suit une couche de molybdène (4) dans la direction de croissance.

4. Miroir multicouche selon l'une des revendications précédentes, **caractérisé en ce que** les couches de barrière (5) ont une épaisseur de l'ordre de 0,2 nm à 0,8 nm.

5. Miroir multicouche selon l'une des revendications précédentes, **caractérisé en ce que** le miroir multicouche (1) présente au moins une couche de recouvrement (6) qui n'est constituée ni de silicium ni de molybdène.

6. Miroir multicouche selon la revendication 5, **caractérisé en ce que** la couche de recouvrement (6) contient un nitrure de silicium ou un borure de silicium.

7. Miroir multicouche selon la revendication 5, **caractérisé en ce que** la couche de recouvrement (6) contient un oxyde, siliciure, nitrure, carbure ou borure ou au moins l'un des matériaux ruthénium, rhodium, scandium et zirconium.

8. Miroir multicouche selon l'une des revendications précédentes, **caractérisé en ce que** le miroir multicouche (23) est appliqué sur une surface courbée d'un substrat (24).

9. Miroir multicouche selon la revendication 8, **caractérisé en ce que** la surface du substrat (24) est courbée de manière non sphérique.

10. Miroir multicouche selon l'une des revendications précédentes, **caractérisé en ce que** le miroir multicouche (23) est appliqué sur un substrat (24) sur lequel est disposé un dispositif de chauffage (27) qui chauffe le miroir multicouche (23) à une température de fonctionnement de 300°C ou davantage et de préférence de 400°C ou davantage.

11. Miroir multicouche selon l'une des revendications précédentes, **caractérisé en ce que** le miroir multicouche (23) est le miroir collecteur d'une source (25) de rayonnement dans l'ultraviolet extrême.

12. Utilisation d'un miroir multicouche selon l'une des revendications 1 à 11 pour réfléchir le rayonnement dans l'ultraviolet extrême à une température de fonctionnement de 300°C à 500°C.
